(19) Europäisches Patentamt / European Patent Office / Office européen des brevets

(11) **EP 2 870 205 B1**

(12) **FASCICULE DE BREVET EUROPEEN**

(45) Date de publication et mention de la délivrance du brevet:
**19.10.2016 Bulletin 2016/42**

(21) Numéro de dépôt: **13731408.4**

(22) Date de dépôt: **11.06.2013**

(51) Int Cl.:
*C09D 4/06* (2006.01)     *C09D 133/14* (2006.01)
*C09D 133/02* (2006.01)     *C09D 129/10* (2006.01)
*C09D 7/02* (2006.01)

(86) Numéro de dépôt international:
**PCT/FR2013/051355**

(87) Numéro de publication internationale:
**WO 2014/006291 (09.01.2014 Gazette 2014/02)**

(54) **UTILISATION DE NOUVEAUX ADDITIFS, DANS UNE FORMULATION DE PEINTURE COMPRENANT DES PARTICULES DE DIOXYDE DE TITANE, COMME AGENTS AMELIORANT L'OPACITE DU FILM SEC OU EN COURS DE SECHAGE**

VERWENDUNG VON NEUEN ADDITIVEN IN EINER LACKFORMULIERUNG MIT TITANDIOXIDPARTIKELN ALS MITTEL ZUR VERBESSERUNG DER TRÜBUNG EINES TROCKENEN ODER TROCKNENDEN FILMS

USE OF NEW ADDITIVES IN A PAINT FORMULATION COMPRISING TITANIUM DIOXIDE PARTICLES AS AGENTS IMPROVING THE OPACITY OF THE DRY OR DRYING FILM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2012 FR 1256547**

(43) Date de publication de la demande:
**13.05.2015 Bulletin 2015/20**

(73) Titulaire: **COATEX**
**69730 Genay (FR)**

(72) Inventeurs:
• **BOUZID, Mehdi**
  **Fort Mill, South Carolina 29708 (US)**
• **SUAU, Jean-Marc**
  **F-69480 Lucenay (FR)**
• **RUHLMANN, Denis**
  **F-69730 Genay (FR)**
• **GUERRET, Olivier**
  **46170 Pern (FR)**

(74) Mandataire: **Balmefrezol, Ludovic Francis Pierre et al**
**Coatex SAS**
**35, rue Ampère**
**69730 Genay (FR)**

(56) Documents cités:
**FR-A1- 2 846 978**

**Description**

La présente invention se rapporte à l'utilisation de nouveaux additifs comme agents améliorant l'opacité du film sec ou en cours de séchage d'une formulation de peinture comprenant des particules de dioxyde de titane, ce qui permet de réduire la quantité de ce pigment dans les peintures.

Les pigments minéraux, tel que le $TiO_2$, sont des produits dont la disponibilité devient de plus en plus limitée. Ceci conduit à une augmentation de leur prix. On recherche donc à réduire leur utilisation dans les produits qui en contiennent, notamment les peintures, sans pour autant réduire les qualités optiques des peintures.

Plusieurs stratégies ont pour but de promouvoir les aspects bénéfiques du dioxyde de titane tout en minimisant les quantités nécessaires. Or malgré l'utilisation de dispersants dans les formulations, le phénomène de floculation des particules notamment lors du séchage du film de peinture réduit l'efficacité opacifiante du $TiO_2$. Dans cette optique, plusieurs techniques sont proposées dans l'art antérieur pour améliorer l'espacement et la distribution des particules de pigment $TiO_2$ dans la peinture.

Notamment, certaines de ces stratégies résident dans la substitution d'une partie des particules de $TiO_2$ par un autre pigment, notamment dans les peintures dites à haute concentration pigmentaire volumique. Ce pigment additionnel est alors présenté comme une particule extenseur/espaceur, c'est-à-dire comme permettant d'espacer mécaniquement les particules de pigments de $TiO_2$. De telles approches ne sont néanmoins pas satisfaisantes en ce qu'elles conduisent pendant la phase de séchage de la peinture à une agglomération des particules de dioxyde de titane, n'ayant alors pas l'effet escompté sur les qualités optiques attendues.

Pour résoudre ce problème technique, le document WO 2006/023065 propose d'utiliser un pigment particulier du type oxyde métallique, tel que l'oxyde de zinc, qui est présenté comme ayant une affinité pour la surface des particules de $TiO_2$. Egalement, il est fait mention dans ce document de l'utilisation d'un dispersant oligomérique/polymérique, destiné à éviter la floculation dans le film sec.

La demande US 2004/0202601 quant à elle décrit une méthode pour espacer les particules de $TiO_2$ en utilisant des particules espaceurs constituées d'un pigment additionnel de type notamment carbonate de calcium, silice, alumine et d'un composé de type homopolymère/copolymère d'acide acrylique. Ce composé polymérique est présenté comme ayant un rôle dans la viscosité et la dispersibilité du pigment additionnel dans la composition.

Ces solutions ne sont pas satisfaisantes en ce qu'elles consistent à remplacer une partie du dioxyde de titane par un autre pigment, ce qui conduit souvent à faire un compromis sur les qualités attendues des produits finis.

Les documents EP 1 270 687 et EP 1 070 739, quant à eux, décrivent l'utilisation de particules de polymères adsorbées à la surface de particules de pigment. Les polymères dont il est question dans ces documents présentent une structure non hydrosoluble, par exemple de type styrènique, sur laquelle sont greffés des groupes fonctionnels acides pendants du type dihydrogène phosphate, phosphonate, acide sulfonique ou multiacide.

Ainsi, cette stratégie consiste à encapsuler les particules de $TiO_2$ dans un latex spécial. La technologie réside dans le mélange d'une suspension de $TiO_2$ et de latex, de manière à revêtir les particules de $TiO_2$ par ce latex. Les particules ainsi obtenues sont ensuite utilisées comme source de dioxyde de titane dans des formulations de peinture. Selon cette approche, le choix du latex dépend de la nature du $TiO_2$, ainsi que de la nature du liant utilisé dans la peinture. Ainsi, la technologie décrite doit être adaptée à chaque formulation de peinture, ce qui constitue une limite importante à l'utilisation d'une telle technologie.

Un objet de la présente invention est de réduire la quantité de particules de $TiO_2$ utilisée dans les compositions de peintures, sans pour autant réduire les qualités optiques des peintures attendues.

Un autre objet de la présente invention est de réduire la quantité de particules de $TiO_2$ sans pour autant avoir obligatoirement à compenser cette baisse par l'ajout d'un autre pigment dans la composition.

Un autre objet de la présente invention est de permettre une réduction de la quantité de $TiO_2$ dans les peintures sans modification profonde des formulations de peinture, par exemple sans modifier les caractéristiques rhéologiques.

Un autre objet de la présente invention est de permettre de réduire la quantité de $TiO_2$ dans les formulations de peinture, par une approche facile à mettre en oeuvre par le formulateur.

Un autre objet de la présente invention est de maintenir une séparation et éviter la floculation entre les particules de $TiO_2$ pendant le séchage du film de peinture.

Un autre objet de la présente invention est de réduire la quantité de $TiO_2$ dans les peintures en utilisant un composé à faible dose tout en maintenant les propriétés optiques attendues.

Les inventeurs se sont rendus compte de manière surprenante qu'en utilisant une famille de polymères hydrosolubles, tous ces objectifs étaient atteints. L'utilisation de tels polymères permet en effet d'augmenter l'efficacité du dioxyde de titane et donc d'en réduire l'usage sans détériorer les performances de la peinture et sans modification substantielle des propriétés rhéologiques des formulations. En particulier, l'intérêt de ces molécules est d'apporter cet effet à partir de doses de l'ordre de quelques pour cents.

La présente invention concerne donc l'utilisation dans une formulation de peinture comprenant des particules de dioxyde de titane, comme agent améliorant l'opacité du film sec ou en cours de séchage, d'un copolymère hydrosoluble de type peigne présentant un squelette acide (méth)acrylique et des branches polyalkylèneglycol.

Par « dioxyde de titane » ou « particules de dioxyde de titane », on entend des particules du type rutile ou anatase, telles qu'obtenues par des procédés classiques industriels à partir de minerai, par exemple par un procédé au sulfate ou par un procédé au chlorure. Selon l'invention, les particules de $TiO_2$ se trouvent sous forme de suspensions, dispersions dans un liquide ou sous forme de poudre. Lorsque le $TiO_2$ se trouve sous forme de poudre, les particules présentent une granulométrie caractérisée par une taille moyenne de particules comprise entre 100 et 500 nm, par exemple comprise entre 200 et 400 nm, par exemple une taille moyenne de 250 nm. De telles particules sont disponibles dans le commerce.

Par « polyalkylène glycol », on entend un polymère d'un alkylène glycol dérivé d'un oxyde oléfinique. Le polyalkylène glycol selon la présente invention est par exemple le polyéthylène glycol, le polypropylène glycol, le polybutylène glycol ou un polyalkylène glycol renfermant une proportion de groupe éthylène-oxy et /ou une proportion de groupe propylène-oxy et/ou une proportion de groupe butylène-oxy. Le polyalkylène glycol selon la présente invention peut par exemple comprendre une proportion dominante de groupe éthylène-oxy en association avec une proportion secondaire de groupe propylène-oxy.

Des exemples spécifiques de polymère alkylène glycol comprennent : les polyalkylènes glycols ayant un poids moléculaire moyen de 1 000, 4 000, 6000, 10 000 et 20 000 g/mol (dans le cas du polyéthylène glycol appelés PEG-1 000, PEG-4 000, PEG-6 000, PEG 10 000, PEG 20 000) ; les polyéthylène polypropylène glycols ayant un pourcentage d'oxyde d'éthylène compris entre 20 et 80 % en poids et un pourcentage d'oxyde de propylène compris entre 20 et 80 % en poids.

Plus particulièrement, selon un aspect de la présente invention, le copolymère comprend :

a) 4 % à 25 % en poids de monomères d'acide acrylique et/ou d'acide méthacrylique et/ou de l'un quelconque de leur sel,

b) 75 % à 96 % en poids d'au moins un monomère de formule (I) :

$$R\text{-}X\text{-}R' \qquad (I)$$

selon laquelle :

R représente une fonction insaturée polymérisable, notamment acrylate, méthacrylate, méthacryluréthane, vinyl ou allyl,
R' désigne l'hydrogène ou un groupe alkyle ayant de 1 à 4 atomes de carbone,
X représente une structure comportant n unité(s) d'oxyde d'éthylène OE et m unité(s) d'oxyde de propylène OP, disposées de manière aléatoire,
m et n sont 2 entiers, compris entre 0 et 100, dont l'un au moins est non nul, et sont tels que m+n est supérieur à 17,

ledit copolymère présentant une masse moléculaire comprise entre 200 000 et 50 000 000 g/mol.

De tels copolymères sont décrits dans le secteur technique des sauces de couchage entrant dans la fabrication des papiers et des cartons couchés à partir desdites sauces. Notamment, dans la demande de brevet WO 2004/044022, de tels copolymères sont décrits comme des agents améliorant l'activation de l'azurage optique dans la fabrication de sauces de couchage papetière. Le brevet EP 1 966 441 quant à lui décrit ces copolymères comme des agents de rétention d'eau et des agents modificateurs de rhéologie pour les sauces de couchage papetières.

De manière surprenante, de tels copolymères ont en effet un comportement rhéologique différent dans les formulations de peinture selon la présente invention, en présence de particules de dioxyde de titane.

De tels copolymères ne sont pas décrits dans l'art antérieur comme agents améliorant l'opacité du film sec ou en cours de séchage dans une formulation de peinture comprenant des particules de dioxyde de titane.

Ainsi, la présente invention s'inscrit dans le secteur des agents améliorant l'activité optique, en particulier l'opacité, de produits secs ou en cours de séchage, issus de formulations aqueuses de peinture à base de dioxyde de titane contenant lesdits agents.

Par « agent améliorant l'opacité du film sec ou en cours de séchage », on entend un agent qui permet pendant ou après séchage d'obtenir un produit dont l'opacité est améliorée. Le produit est en l'espèce un film de peinture en cours de séchage ou un film de peinture sec, c'est-à-dire résultant de l'application d'une épaisseur déterminée d'une formulation aqueuse de peinture. Dans le contexte de la présente invention, le terme « améliorer » signifie augmenter la valeur de l'opacité pour une formulation de peinture comprenant une quantité déterminée de $TiO_2$ et un agent selon l'invention, par rapport à une valeur d'opacité mesurée pour une même formulation de peinture qui comprend une même quantité déterminée de $TiO_2$, mais pas d'agent selon l'invention.

Par « opacité », on entend la capacité d'un film de peinture pour une épaisseur d'application déterminée à couvrir de manière équivalente un support de couleur noire et un même support de couleur blanche. En d'autres mots, l'opacité est l'aptitude du film sec ou en cours de séchage à masquer tout autre couleur sous-jacente. L'opacité d'un film de peinture est déterminée par la mesure de la réflectance $R_n$ d'une couche de peinture d'une épaisseur donnée sur un fond noir, puis de la réflectance $R_b$ d'une couche de la même peinture d'une même épaisseur sur un fond blanc. L'opacité est le pourcentage du rapport $R_n/R_b$. La réflectance est en l'espèce la grandeur y de l'espace colorimétrique xyz. Pour une épaisseur d'application donnée, l'homme du métier cherche à se rapprocher le plus possible d'une opacité de 100 %.

Bien que l'amélioration de la clarté ou de la blancheur du film de peinture ne soit pas un objet de la présente invention, on caractérise dans les exemples de la présente demande l'indice de clarté du film de peinture qui est déterminé par la mesure de la composante L* dans l'espace colorimétrique Lab (L*a*b*), à l'aide d'un spectrophotomètre. Ainsi, par « clarté » (en anglais « brightness »), on entend l'indice de clarté du film de peinture déterminé par la mesure de la composante L* dans l'espace colorimétrique Lab (L*a*b*), à l'aide d'un spectrophotomètre. L* varie entre 0 (noir) et 100 (blanc).

Lors de l'étape de séchage de la peinture, après application de celle-ci sur son support, les particules de pigment et de liant se rapprochent. L'évaporation finale de la phase aqueuse oblige ces particules à se rapprocher, s'adsorber et/ou fusionner pour constituer un film continu. Lors de cette étape d'évaporation finale, on cherche à empêcher au maximum la floculation des particules de dioxyde de titane. A défaut, on perd une partie des qualités optiques de ces particules. La présente demande de brevet s'inscrit dans cette problématique. Plus précisément, la présente demande repose sur un comportement particulier des molécules de copolymères de la présente invention dans les formulations de peinture comportant des particules de dioxyde de titane. Sans vouloir être liés par une théorie quelconque, au regard des résultats obtenus, les inventeurs sont d'avis que les copolymères selon l'invention présentent des propriétés d'encombrement stérique qui permettent d'espacer les particules de $TiO_2$ dans les formulations de peinture, mais également de maintenir la séparation des particules de $TiO_2$ lors de l'étape de séchage du film de peinture, ce qui permet de conserver l'activité optique de chaque particule individuellement à partir de l'étape d'application de la peinture et après séchage du film appliqué sur son support.

Les copolymères selon l'invention constituent des « molécules espaceur » (« spacing molecules » en anglais) dans les formulations de peinture comportant des particules de dioxyde de titane, ce qui réduit considérablement le phénomène de floculation des particules de dioxyde de titane lors de l'étape de séchage de la peinture.

Selon l'invention, le copolymère utilisé comme agent améliorant l'activité optique des particules de dioxyde de titane présente une masse moléculaire moyenne en poids comprise entre 200 000 et 50 000 000 g/mol.

Il est intéressant de noter que dans le cadre de la présente invention, malgré un poids moléculaire élevé, et par comparaison à des polymères de l'art antérieur également de haut poids moléculaire utilisés comme épaississants, les copolymères selon l'invention n'induisent pas une modification substantielle des viscosités dans les formulations aqueuses qui les incorporent aux concentrations indiquées. Ceci constitue un avantage pour le formulateur.

Selon un aspect de la présente invention, le copolymère utilisé comme agent améliorant l'activité optique des particules de dioxyde de titane présente une masse moléculaire moyenne en poids comprise entre 250 000 et 15 000 000 g/mol, par exemple entre 300 000 g/mol et 6 000 000 g/mol, telle que déterminée par chromatographie d'exclusion stérique (CES).

Selon un aspect de la présente invention, ledit copolymère hydrosoluble est constitué de :

a) 5 à 20 % en poids de monomères d'acide acrylique et/ou d'acide méthacrylique et/ou de l'un quelconque de leur sel, et

b) 80 à 95 % en poids d'au moins un monomère de formule (I) tel que ci-dessus décrit.

Selon un autre aspect de la présente invention, ledit copolymère hydrosoluble est constitué de :

A1) 4 à 15 % en poids de monomères d'acide acrylique ou de l'un quelconque de son sel,

A2) 1 à 5 % en poids de monomères d'acide méthacrylique ou de l'un quelconque de son sel, et

b) 80 à 95 % en poids d'au moins un monomère de formule (I).

Selon un autre aspect encore de la présente invention, ledit copolymère hydrosoluble est tel que n et m sont deux entiers non nuls et sont tels que n+m>50.

Selon un autre aspect encore de la présente invention, ledit copolymère hydrosoluble est tel que n et m sont deux entiers non nuls et sont tels que n+m>60.

Selon un aspect de la présente invention, le copolymère tel que ci-dessus défini est utilisé comme agent améliorant l'activité optique des particules de dioxyde de titane dans une formulation de peinture présentant une concentration pigmentaire volumique (ci après CPV) comprise entre 15 et 70 %.

La « concentration pigmentaire volumique » est définie par la formule suivante :

$$\text{CPV } (\%) = 100 \text{ x } V_c / (V_c + V_l)$$

avec $V_c$ qui représente le volume des charges minérales et

$V_l$ qui représente le volume de liant dans la formulation de peinture.

Selon un autre aspect de la présente invention, le copolymère tel que ci-dessus défini est utilisé comme agent améliorant l'activité optique des particules de dioxyde de titane dans une formulation de peinture présentant une concentration pigmentaire volumique (CPV) comprise entre 15 et 50 %.

La présente invention concerne également des formulations de peinture comprenant des particules de dioxyde de titane et un copolymère selon l'invention.

Plus particulièrement, la présente invention concerne également une formulation de peinture aqueuse comprenant :

- de l'eau,
- des particules de dioxyde de titane, et
- un copolymère hydrosoluble constitué de :

  a) 4 à 25 % en poids de monomères d'acide acrylique et/ou d'acide méthacrylique et/ou de l'un quelconque de leur sel,

  b) 75 à 96 % en poids d'au moins un monomère de formule (I) :

  R-X-R'      (I)

  selon laquelle :

  R représente une fonction insaturée polymérisable, notamment acrylate, méthacrylate, méthacryluréthane, vinyl ou allyl,
  R' désigne l'hydrogène ou un groupe alkyle ayant de 1 à 4 atomes de carbone,
  X représente une structure comportant n unité(s) d'oxyde d'éthylène OE et m unité(s) d'oxyde de propylène OP, disposées de manière aléatoire,
  m et n sont 2 entiers, compris entre 0 et 100, dont l'un au moins est non nul, et sont tels que m+n est supérieur à 17,

ledit copolymère présentant une masse moléculaire comprise entre 250 000 et 50 000 000 g/mol.

Selon un aspect de la présente invention, la formulation de peinture aqueuse comprend de 0,05 à 5 % en poids dudit copolymère.

Selon un autre aspect de la présente invention, la formulation de peinture aqueuse comprend de 0,1 à 2 % en poids dudit copolymère.

Selon un aspect de la présente invention, la formulation de peinture aqueuse comprend de 4 à 40 % en poids de particules de dioxyde de titane.

Selon un autre aspect de la présente invention, la formulation de peinture aqueuse comprend de 15 à 25 % en poids de particules de dioxyde de titane.

Selon un autre aspect encore de la présente invention, la formulation de peinture aqueuse comprend au moins une autre charge minérale pigmentaire sélectionnée dans le groupe consistant en le carbonate de calcium, le kaolin et le silicate.

Selon un autre aspect encore, les charges minérales pigmentaires de la formulation de peinture aqueuse de la présente invention consistent en :

- de 30 à 90 % en poids de particules de dioxyde de titane et

- de 10 à 70 % en poids d'au moins une autre charge minérale pigmentaire sélectionnée dans le groupe consistant en le carbonate de calcium, le kaolin et le silicate.

Ledit copolymère selon l'invention est obtenu par des procédés connus de copolymérisation radicalaire conventionnelle en solution, en émulsion directe ou inverse en bulk, en suspension ou précipitation dans des solvants appropriés, en présence d'initiateurs et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Les exemples qui suivent permettent de mieux appréhender la présente invention, sans pourtant en limiter la portée.

**EXEMPLES**

Dans chacun des exemples suivants, la masse moléculaire des copolymères selon l'invention est déterminée par chromatographie d'exclusion stérique (CES) ou en anglais « Gel Permeation Chromatography » (GPC).

Une telle technique met en oeuvre un appareil de chromatographie liquide de marque WATERS™ doté de deux détecteurs. L'un de ces détecteurs combine la diffusion dynamique statique de la lumière à un angle de 90°C à la viscosimétrie mesurée par un viscosimètre détecteur VISCOTEK™ MALVERN™. L'autre de ces détecteur est un détecteur de concentration réfractométrique de marque WATERS™.

Cet appareillage de chromatographie liquide est doté de colonnes d'exclusion stérique convenablement choisies par l'homme du métier afin de séparer les différents poids moléculaires des polymères étudiés. La phase liquide d'élution est une phase aqueuse contenant 1 % de $KNO_3$.

De manière détaillée, selon une première étape, on dilue à 0,9 % sec la solution de polymérisation dans l'éluant de la CES, qui est une solution à 1 % de $KNO_3$. Puis on filtre à 0,2 $\mu m$. 100 $\mu L$ sont ensuite injectés dans l'appareil de chromatographie (éluant : une solution à 1 % de $KNO_3$).

L'appareil de chromatographie liquide contient une pompe isocratique (WATERS 515) dont le débit est réglé à 0,8 ml/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur, une colonne linéaire de type ULTRAHYDROGEL WATERS™ de 30 cm de long et 7,8 mm de diamètre intérieur et deux colonnes ULTRAHYDROGEL 120 ANGSTROM WATERS™ de 30 cm de longueur et 7,8 mm de diamètre intérieur. Le système de détection quant à lui se compose d'une part d'un détecteur réfractométrique de type RI WATERS™ 410 et de l'autre côté d'un double détecteur viscosimètre et diffusion de la lumière à un angle de 90° de type 270 DUAL DETECTOR MALVERN™. Le four est porté à la température de 55°C, et le réfractomètre est porté à la température de 45°C.

L'appareil de chromatographie est étalonné par un unique étalon de PEO 19k de type PolyCAL™ MALVERN™.

La préparation des copolymères se fait selon des procédés connus de l'homme du métier. On peut notamment se référer aux différents documents cités dans la demande comme arrière-plan technologique.

En outre, les peintures sont formulées selon les méthodes connues de l'homme du métier.

Dans le cadre des exemples qui suivent, la mesure de l'opacité et de la clarté (ou blancheur) se font de la manière suivante :

On dépose une épaisseur de film de 75 $\mu m$ à la surface d'un support de couleur noire et d'un même support de couleur blanche. On attend 24 heures après application du film sur le support à température d'environ 25°C pour réaliser les mesures de réflectance $R_n$ du film de peinture sur un fond noir, puis de réflectance $R_b$ du film sur un fond blanc. L'opacité est le pourcentage du rapport $R_n/R_b$.

Egalement, on mesure l'indice de clarté du film de peinture déterminé par la mesure de la composante $L^*$ dans l'espace colorimétrique Lab ($L^*a^*b^*$), à l'aide d'un spectrophotomètre.

On détermine également la viscosité desdites formulations à différents gradients de vitesse :

- à faible gradient de vitesse, la viscosité Brookfield qui est mesurée à l'aide d'un viscosimètre Brookfield type RVT, dans le flacon non agité, à une température de 25°C et à deux vitesses de rotation de 10 et 100 tours par minute avec le mobile adéquat. La lecture est effectuée après 1 minute de rotation. On obtient ainsi 2 mesures de viscosité Brookfield respectivement notées $\mu_{BK10}$ et $\mu_{BK100}$ (mPa.s) ;
- à moyen gradient de vitesse : la viscosité Stormer, notée $\mu_S$ (Krebs Units) ;
- à haut gradient de vitesse : la viscosité Cone Plan ou viscosité ICI, notée $\mu_I$ (Poises, 1P = 100 mPa.s).

**Exemple 1**

Cet exemple illustre l'utilisation d'un agent selon l'invention dans une formulation de peinture aqueuse (comprenant un liant de type vinyl acrylique), dont la constitution est donnée dans le tableau 1 ci-dessous.

**Tableau 1**

| Constituant de la peinture | Masse (g) |
|---|---|
| Eau | 314,0 |
| Epaississant (Natrosol® Plus 330) | 5,0 |
| Carbonate de sodium | 2,0 |
| Dispersant ionique (KTTP) | 2,0 |
| Agent anti-mousse (FoamStar® A-38) | 4,0 |
| Biocide (Proxel® AQ) | 1,5 |
| Liant (UCAR® Latex 310) | 395,0 |
| Pigment silicate (Minex® 10) | Voir tableau 2 |
| Pigment TiO$_2$ (Kronos® 2310) | Voir tableau 2 |
| Additif total dont agent selon la présente invention | Voir tableau 2 |

Les essais qui suivent illustrent l'utilisation d'un polymère selon l'invention comme agent améliorant l'opacité du film sec ou en cours de séchage d'une formulation de peinture aqueuse comprenant des particules de dioxyde de titane, ce qui permet de réduire la quantité de ce pigment dans les peintures.

Plus particulièrement l'agent selon l'invention est ici un copolymère présentant un squelette acide acrylique (8 % en poids) et acide méthacrylique (2,8 % en poids) et des macromonomères branchés de structure 48 unités OE et 15 unités OP (89,2 % en poids), de poids moléculaire 336 500 g/mol.

Tous les résultats ont été regroupés dans le tableau 2.

Pour chacun des essais, on a déterminé l'opacité, la clarté et les viscosités BK $\mu$10, BK $\mu$100, ICI et Stormer, selon les méthodes décrites ci-dessus.

**Tableau 2**

| Essai n° | | 1 | 2 | 3 | 4 | 5 |
|---|---|---|---|---|---|---|
| Pigment TiO$_2$ (Kronos® 2310) | Masse (g) | 300 | 270 | 270 | 270 | 270 |
| | % | 100 | 90 | 90 | 90 | 90 |
| Pigment silicate (Minex® 10) | | 145 | 145 | 145 | **175** | 145 |
| Dispersant (Tamol® 731) | | 8,20 | 8,20 | 1,50 | 1,50 | - |
| Dispersant (Coadis® 123K) | | - | - | - | - | **1,50** |
| Agent selon l'invention | | - | - | **6,90** | **6,90** | 6,90 |
| Additif Total | | 8,20 | 8,20 | 8,40 | 8,40 | 8,40 |
| Opacité | | 96,59 | 95,77 | 96,53 | 96,62 | 96,24 |
| Clarté L* | | 95,24 | 95,17 | 95,01 | 94,4 | 95,03 |
| $\mu_S$ | | 84,1 | 80,8 | 79,4 | 77,6 | 79,9 |
| $\mu_I$ | | 0,785 | 0,665 | 0,700 | 0,505 | 0,725 |
| $\mu_{BK10}$ | | 4640 | 4180 | 3620 | 3380 | 3740 |
| $\mu_{BK100}$ | | 1380 | 1210 | 1 140 | 1040 | 1090 |

*Il convient de noter que la quantité totale d'additif (dispersant plus agent selon l'invention) utilisée est similaire dans tous les essais : 8,40 g pour les essais 3, 4 et 5 contre 8,20 g pour les essais 1 et 2.*

*Le pigment TiO₂ se trouve ici sous forme de suspension de titane rutile (environ 76 % extrait sec en poids)). Le pigment silicate se trouve sous forme de poudre.*

*L'agent selon l'invention est sous forme de solution/émulsion dans l'eau à 25 %.*

*La CPV est d'environ 25 %.*

L'essai 1 correspond à un contrôle. Dans l'essai 2, on réduit la quantité de TiO₂ de 10 % par rapport à l'essai 1. On constate alors une diminution de près d'un point sur l'opacité mesurée. Ainsi, tel qu'attendu, on montre qu'une diminution de 10 % de la quantité de pigment TiO₂ conduit à diminuer significativement l'opacité mesurée.

Dans l'essai 3, on réduit la quantité de TiO₂ de 10 % dans la peinture, mais on ajoute un agent selon l'invention (proportion : 0,6 % en poids). Ainsi, on démontre que malgré la diminution de quantité de TiO₂ dans la peinture, l'opacité de la peinture reste constante.

L'agent selon l'invention améliore l'espacement entre les particules de TiO₂ pendant l'étape de séchage du film de peinture (mesure de l'opacité sur film de peinture sec), ce qui permet une meilleure activité optique des particules de dioxyde de titane de sorte à obtenir une meilleure opacité du film de peinture sec, de sorte qu'il est possible de diminuer la proportion desdites particules de TiO₂ dans la peinture tout en maintenant le même niveau d'opacité.

Il est également intéressant de noter que les viscosités mesurées dans les essais 3 et 5, notamment à un gradient de cisaillement faible ou moyen, sont comparables à celles de l'essai contrôle.

Dans l'essai 4, on réduit la quantité de TiO₂ de 10 % dans la peinture, on ajoute un agent selon l'invention (proportion 0,6 % en poids, identique à l'essai 2) et on compense la perte de pigment TiO₂ par ajout de 30 g d'un autre pigment, à savoir un pigment silicate.

L'opacité mesurée est alors du même ordre de grandeur que l'opacité mesurée sans compensation (essai 3). Ainsi l'ajout d'un agent selon l'invention permet de réduire la quantité de particules de pigment TiO₂ sans nécessité de compenser cette baisse par l'ajout d'un autre pigment dans la composition. Ceci représente un avantage en terme de coûts.

Dans l'essai 5, on remplace un dispersant, à savoir le Tamol® 731, par un dispersant de composition polymérique différent, à savoir le Coadis® 123K. On montre que l'opacité obtenue est du même ordre de grandeur que celle obtenue pour l'essai 3 ou pour l'essai 4, de sorte que le choix de la composition polymérique du dispersant n'a pas, en l'espèce pour ces essais, d'influence sur la valeur de l'opacité.

On note à toutes fins utiles que l'ajout d'un agent selon l'invention n'a pas d'effet significatif sur la clarté L* (ou blancheur) du film de peinture.

**Exemple 2**

Cet exemple illustre l'utilisation d'un agent selon l'invention dans une autre formulation de peinture aqueuse (comprenant notamment un liant de type acrylique), dont la constitution est donnée dans le tableau 3 ci-dessous.

**Tableau 3**

| Constituant de la peinture | Masse (g) |
|---|---|
| Eau | 236,8 |
| Biocide (Proxel® AQ) | 1,5 |
| Tensioactif (Strodex® PK-0VOC) | 2,0 |
| Anti-mousse (Rhodoline® 643) | 6,0 |
| Agent neutralisant (AMP 95) | 2,0 |
| Liant (UCAR® Latex 631) | 500,0 |
| Agent de coalescence (Texanol®) | 12,5 |
| Epaississant (Coapur® XS 71) | 1,0 |
| Epaississant (Rheotech® 2000) | 7,0 |
| Pigment Kaolin (Polygloss® 90) | 35,0 |
| Pigment TiO₂ (Ti-Pure® R-706) | Voir tableau 4 |
| Agent selon l'invention | Voir tableau 4 |

Plus particulièrement l'agent selon l'invention est ici un copolymère présentant un squelette acide acrylique (8 % en poids) et acide méthacrylique (2,8 % en poids) et des macromonomères branchés de structure (89,2 % en poids), de poids moléculaire 336 500 g/mol.

Tous les résultats ont été regroupés dans le tableau 4.

Pour chacun des essais, on a déterminé l'opacité, la clarté et les viscosités BK μ10, BK μ100, ICI et Stormer, selon les méthodes décrites ci-dessus.

**Tableau 4**

| Essai n° | | 6 | 7 | 8 |
|---|---|---|---|---|
| Pigment TiO$_2$ (Ti-Pure® R-706) | Masse (g) | 235 | 211,5 | 211,5 |
| | % | 100 | 90 | 90 |
| Dispersant (Rhodoline® 286N) | | 6,2 | 6,2 | 1,0 |
| Agent selon l'invention | | - | - | **27,0** |
| Opacité | | 97,56 | 97,04 | 97,43 |
| Clarté L* | | 96,06 | 95,79 | 95,60 |

*Le pigment TiO$_2$ se trouve ici sous forme de suspension de titane rutile (environ 76 % d'extrait sec en poids).*

Dans l'essai 2, on réduit la quantité de TiO$_2$ de 10 % dans la peinture. Ce faisant, on diminue l'opacité mesurée. Ainsi, tel qu'attendu, on montre qu'une diminution de 10 % de la quantité de pigment TiO$_2$ conduit à diminuer l'opacité mesurée.

Dans l'essai 3, on réduit la quantité de TiO$_2$ de 10 % dans la peinture, mais on ajoute un agent selon l'invention (proportion 3 % en poids).

On constate que l'opacité mesurée est similaire à celle obtenue dans le cas de l'essai contrôle à 100 % TiO$_2$. L'agent selon l'invention permet donc de maintenir l'espacement entre les particules de TiO$_2$ pendant l'étape de séchage du film de peinture (mesure de l'opacité sur film de peinture sec), ce qui permet une meilleure activité optique des particules de dioxyde de titane. On démontre ici qu'il est possible de diminuer la quantité de TiO$_2$ dans les peintures sans perdre d'opacité sur le film de peinture.

On note à toutes fins utiles que l'ajout d'un agent selon l'invention n'a pas d'effet significatif sur la clarté L* (ou blancheur) du film de peinture.

A toutes fins utiles, il est précisé que les propriétés rhéologiques des différentes formulations présentées sont comparables entre les différents essais et compatibles avec l'application peinture.

**Revendications**

1. Utilisation, dans une formulation aqueuse de peinture comprenant des particules de dioxyde de titane, comme agent améliorant l'opacité du film sec ou en cours de séchage, d'un copolymère hydrosoluble constitué de :

   a) 4 à 25 % en poids de monomères d'acide acrylique et/ou d'acide méthacrylique et/ou de l'un quelconque de leur sel,

   b) 75 à 96 % en poids d'au moins un monomère de formule (I) :

   R-X-R'          (I)

   selon laquelle :

   R représente une fonction insaturée polymérisable, notamment acrylate, méthacrylate, méthacryluréthane, vinyl ou allyl,
   R' désigne l'hydrogène ou un groupe alkyle ayant de 1 à 4 atomes de carbone,
   X représente une structure comportant n unité(s) d'oxyde d'éthylène OE et m unité(s) d'oxyde de propylène OP, disposées de manière aléatoire,
   m et n sont 2 entiers, compris entre 0 et 100, dont l'un au moins est non nul, et sont tels que m+n est supérieur à 17,

   ledit copolymère présentant une masse moléculaire comprise entre 200 000 et 50 000 000 g/mol.

**2.** Utilisation selon la revendication 1, selon laquelle ledit copolymère hydrosoluble présente une masse moléculaire comprise entre 250 000 et 15 000 000 g/mol.

**3.** Utilisation selon la revendication 1 ou 2, selon laquelle ledit copolymère est constitué de :

a) 5 à 20 % en poids de monomères d'acide acrylique et/ou d'acide méthacrylique et/ou de l'un quelconque de leur sel, et
b) 80 à 95 % en poids d'au moins un monomère de formule (I).

**4.** Utilisation selon l'une quelconque des revendications précédentes, selon laquelle ledit copolymère hydrosoluble est constitué de :

A1) 4 à 15 % en poids de monomères d'acide acrylique ou de l'un quelconque de son sel,
A2) 1 à 5 % en poids de monomères d'acide méthacrylique ou de l'un quelconque de son sel, et

b) 80 à 95 % en poids d'au moins un monomère de formule (I).

**5.** Utilisation selon l'une quelconque des revendications précédentes, selon laquelle ledit copolymère hydrosoluble est tel que n et m sont deux entiers non nuls et sont tels que n+m>50.

**6.** Formulation de peinture aqueuse comprenant :

- de l'eau,
- des particules de dioxyde de titane, et
- un copolymère hydrosoluble constitué de :

a) 4 à 25 % en poids de monomères d'acide acrylique et/ou d'acide méthacrylique et/ou de l'un quelconque de leur sel,
b) 75 à 96 % en poids d'au moins un monomère de formule (I) :

$$R\text{-}X\text{-}R' \qquad (I)$$

selon laquelle :

R représente une fonction insaturée polymérisable, notamment acrylate, méthacrylate, méthacryluréthane, vinyl ou allyl,
R' désigne l'hydrogène ou un groupe alkyle ayant de 1 à 4 atomes de carbone,
X représente une structure comportant n unité(s) d'oxyde d'éthylène OE et m unité(s) d'oxyde de propylène OP, disposées de manière aléatoire,
m et n sont 2 entiers, compris entre 0 et 100, dont l'un au moins est non nul, et sont tels que m+n est supérieur à 17,

ledit copolymère présentant une masse moléculaire comprise entre 200 000 et 50 000 000 g/mol.

**7.** Formulation de peinture aqueuse selon la revendication 6, selon laquelle ladite formulation comprend de 0,05 à 5 % en poids dudit copolymère.

**8.** Formulation de peinture aqueuse selon la revendication 6 ou 7, selon laquelle ladite formulation comprend de 4 à 40 % en poids de particules de dioxyde de titane.

**9.** Formulation selon l'une quelconque des revendications 6 à 8, selon laquelle ladite formulation comprend de 15 à 25 % en poids de particules de dioxyde de titane.

**10.** Formulation selon l'une quelconque des revendications 6 à 9, selon laquelle ladite formulation comprend au moins une autre charge minérale pigmentaire sélectionnée dans le groupe consistant en le carbonate de calcium, le kaolin et le silicate.

**Patentansprüche**

1. Verwendung, in einer wässrigen Lackformulierung mit Titandioxidpartikeln als Mittel zur Verbesserung der Trübung eines trockenen oder trocknenden Films, eines wasserlöslichen Copolymers, bestehend aus:

   a) 4 bis 25 Gew % Monomere von Acrylsäure und/oder Methacrylsäure und/oder einem ihrer Salze,
   b) 75 bis 96 Gew % mindestens eines Monomers der Formel (I):

   $$R-X-R' \qquad (I)$$

   wobei:

   R für eine ungesättigte, polymerisierbare Funktion, insbesondere Acrylat-, Methacrylat-, Methacrylurethan-, Vinyl- oder Allylfunktion steht,
   R' Wasserstoff oder eine Alkylgruppe bezeichnet, die 1 bis 4 Kohlenstoffatome aufweist,
   X für eine Struktur steht, die n Einheit(en) Ethylenoxid EO und m Einheit(en) Propylenoxid PO, umfasst, die zufällig angeordnet sind,
   m und n 2 ganze Zahlen im Bereich zwischen 0 und 100 sind, wovon mindestens eine ungleich null ist, und sie so sind, dass m+n größer 17 ist,

   wobei das Copolymer eine molare Masse im Bereich zwischen 200.000 und 50.000.000 g/mol aufweist.

2. Verwendung nach Anspruch 1, wobei das wasserlösliche Copolymer eine molare Masse im Bereich zwischen 250.000 und 15.000.000 g/mol aufweist.

3. Verwendung nach Anspruch 1 oder 2, wobei das Copolymer aus Folgendem besteht:

   a) 5 bis 20 Gew.-% Monomere von Acrylsäure und/oder Methacrylsäure und/oder einem ihrer Salze und
   b) 80 bis 95 Gew.-% mindestens eines Monomers der Formel (I).

4. Verwendung nach einem der vorhergehenden Ansprüche, wobei das wasserlösliche Copolymer aus Folgendem besteht:

   A1) 4 bis 15 Gew % Monomere von Acrylsäure oder einem ihrer Salze,
   A2) 1 bis 5 Gew % Monomere von Methacrylsäure oder einem ihrer Salze, und

   b) 80 bis 95 Gew % mindestens eines Monomers der Formel (I).

5. Verwendung nach einem der vorhergehenden Ansprüche, wobei das wasserlösliche Copolymer so ist, dass n und m zwei ganze Zahlen ungleich null sind und sie so sind, dass n+m>50.

6. Wässrige Lackformulierung, umfassend:

   - Wasser,
   - Titandioxidpartikel und
   - ein wasserlösliches Copolymer, das aus Folgendem besteht:

   a) 4 bis 25 Gew % Monomere von Acrylsäure und/oder Methacrylsäure und/oder einem ihrer Salze,
   b) 75 bis 96 Gew % mindestens eines Monomers der Formel (I):

   $$R-X-R' \qquad (I)$$

   wobei:

   R für eine ungesättigte, polymerisierbare Funktion, insbesondere Acrylat-, Methacrylat-, Methacrylurethan-, Vinyl- oder Allylfunktion steht,
   R' Wasserstoff oder eine Alkylgruppe bezeichnet, die 1 bis 4 Kohlenstoffatome aufweist,
   X für eine Struktur steht, die n Einheit(en) Ethylenoxid EO und m Einheit(en) Propylenoxid PO, umfasst, die zufällig angeordnet sind,

m und n 2 ganze Zahlen im Bereich zwischen 0 und 100 sind, wovon mindestens eine ungleich null ist, und sie so sind, dass m+n größer 17 ist,

wobei das Copolymer eine molare Masse im Bereich zwischen 200.000 und 50. 000. 000 g/mol aufweist.

7. Wässrige Lackformulierung nach Anspruch 6, wobei die Formulierung 0,05 bis 5 Gew.-% des Copolymers umfasst.

8. Wässrige Lackformulierung nach Anspruch 6 oder 7, wobei die Formulierung 4 bis 40 Gew.-% Titandioxidpartikel umfasst.

9. Formulierung nach einem der Ansprüche 6 bis 8, wobei die Formulierung 15 bis 25 Gew.-% Titandioxidpartikel umfasst.

10. Formulierung nach einem der Ansprüche 6 bis 9, wobei die Formulierung mindestens einen anderen mineralischen Pigmentfüllstoff umfasst, ausgewählt aus der Gruppe bestehend aus Calciumcarbonat, Kaolin und Silicat.

**Claims**

1. Use, in an aqueous paint formulation containing titanium dioxide particles, as an agent for improving the opacity of the film that is dry or in the process of drying, of a water-soluble copolymer consisting of:

   a) 4 to 25% by weight of acrylic acid and/or methacrylic acid monomers and/or any of their salts,
   b) 75 to 96% by weight of at least one monomer with the formula (I):

   $$R\text{-}X\text{-}R' \qquad (I)$$

   according to which:

   R represents a polymerizable unsaturated function, notably acrylate, methacrylate, methacrylurethane, vinyl or allyl,
   R' represents hydrogen or an alkyl group having from 1 to 4 carbon atoms,
   X represents a structure with n unit(s) of ethylene oxide EO and m unit(s) of propylene oxide PO, arranged randomly,
   m and n are 2 integers between 0 and 100, at least one of which is non-zero, and are such that m+n is greater than 17,

   said copolymer having a molecular mass between 200,000 and 50,000,000 g/mol.

2. Use according to claim 1, according to which said water-soluble copolymer has a molecular mass between 250,000 and 15,000,000 g/mol.

3. Use according to claim 1 or 2, according to which said copolymer consists in:

   a) 5 to 20% by weight of acrylic acid and/or methacrylic acid monomers and/or any of their salts, and
   b) 80 to 95% by weight of at least one monomer with the formula (I).

4. Use according to any of the preceding claims according to which said water-soluble copolymer consists in:

   A1) 4 to 15% by weight of acrylic acid monomers or any of its salts,
   A2) 1 to 5% by weight of methacrylic acid monomers or any of its salts, and

   b) 80 to 95% by weight of at least one monomer with the formula (I).

5. Use according to any of the preceding claims according to which said water-soluble copolymer is such that n and m are two non-zero integers and are such that n+m>50.

6. Water-based paint formulation including:

> - water,
> - titanium dioxide particles and
> - a water-soluble copolymer consisting essentially in:

>> a) 4 to 25% by weight of acrylic acid and/or methacrylic acid monomers and/or any of their salts,
>> b) 75 to 96% by weight of at least one monomer with the formula (I):

>>> R-X-R'            (I)

>> according to which:

>>> R represents a polymerizable unsaturated function, notably acrylate, methacrylate, methacrylurethane, vinyl or allyl,
>>> R' represents hydrogen or an alkyl group having from 1 to 4 carbon atoms,
>>> X represents a structure with n unit(s) of ethylene oxide EO and m unit(s) of propylene oxide PO, arranged randomly,
>>> m and n are 2 integers between 0 and 100, at least one of which is non-zero, and are such that m+n is greater than 17,

>> the said copolymer having a molecular mass between 200,000 and 50,000,000 g/mol.

7. Aqueous paint formulation according to claim 6 according to which said formulation includes from 0.05 to 5% by weight of said copolymer.

8. Aqueous paint formulation according to claim 6 or 7 according to which the said formulation includes from 4 to 40% by weight of titanium dioxide particles.

9. Formulation according to any of claims 6 to 8 according to which said formulation includes from 15 to 25% by weight of titanium dioxide particles.

10. Formulation according to any of claims 6 to 9 according to which said formulation includes at least one other pigment mineral filler selected from the group consisting of calcium carbonate, kaolin, and silicate.

**EP 2 870 205 B1**

## RÉFÉRENCES CITÉES DANS LA DESCRIPTION

**Documents brevets cités dans la description**

- WO 2006023065 A
- US 20040202601 A
- EP 1270687 A
- EP 1070739 A
- WO 2004044022 A
- EP 1966441 A